(19) Europäisches Patentamt
European Patent Office
Office européen des brevets

(11) Publication number: **0 261 988 B1**

(12) **EUROPEAN PATENT SPECIFICATION**

(45) Date of publication of patent specification: **25.11.92**

(51) Int. Cl.[5]: **C08G 75/02**, C08G 75/14, C08G 69/32, C08G 69/42

(21) Application number: **87308560.9**

(22) Date of filing: **28.09.87**

(54) **Aromatic sulphide amide polymers and a process for the production thereof.**

(30) Priority: **26.09.86 JP 226060/86**

(43) Date of publication of application:
**30.03.88 Bulletin 88/13**

(45) Publication of the grant of the patent:
**25.11.92 Bulletin 92/48**

(84) Designated Contracting States:
**BE CH DE FR GB IT LI NL**

(56) References cited:
**EP-A- 0 162 606**
**US-A- 3 640 965**
**US-A- 3 689 465**

**MAKROMOLEKULARE CHEMIE vol. 184, 1983, pages 1861-1867; G. DACCORD et al.: "Oligo(thiophénylénes-1,4) alpha, omega-difonctionnalisés"**

(73) Proprietor: **Tosoh Corporation**
**4560, Kaisei-cho**
**Shinnanyo-shi, Yamaguchi-ken(JP)**

(72) Inventor: **Ishikawa, Tomohiro**
**6-8-20 Betsumei**
**Yokkaichi-shi Mie-ken(JP)**
Inventor: **Kondo, Yozo**
**2-1473-210 Miyukigaoka**
**Yokkaichi-shi Mie-ken(JP)**

(74) Representative: **Sheard, Andrew Gregory et al**
**Kilburn & Strode 30, John Street**
**London WC1N 2DD(GB)**

**EP 0 261 988 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a novel aromatic sulphide amide polymer and a process for the production thereof.

This invention relates to a novel polymer in the chemical structure of which phenylene groups are bound with amide and thioether groups in between, and which are useful as raw materials for producing moulded matters with improved heat resistance, solvent resistance and mechanical properties, and a process for producing such a polymer.

So far, a number of polymers, thermosetting and thermoplastic, are known as raw material for producing moulded matters of heat resistant resins.

Particularly, whole aromatic heat resistant resins are being developed in many places. Typical polymers include polyphenyleneterephthalic amides, polyimides polyether etherketones, and polyphenylene sulphides.

However, these heat resistant polymers generally hold troubles in the moulding operation. In addition, their properties do not suffice for the applications where improved heat resistance is required.

Further defects of these heat resistant polymers are that their monomers are difficult to synthesise, they require special solvents to conduct the polymerisation process and their moulding is accompanied by a low degree of productivity.

It is desirable to produce novel aromatic sulphide amide polymers having improved heat resistance, solvent resistance and mechanical properties, and a process for the production thereof.

According to a first aspect of the present invention there is provided an aromatic sulphide amide polymer of which 1 - 100% by mole of the composing units consists of the repeating unit having Formula (I) below and 99 - 0% by mole of the composing units consists of a repeating unit having the Formula (II) below.

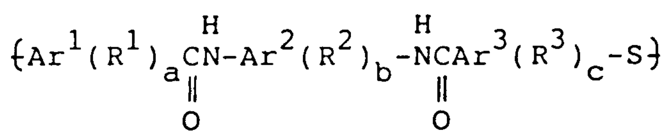 (I)

$$\{Ar^4(R^4)_d-S\} \quad (II)$$

In the formulae above, $Ar^1$, $Ar^2$, $Ar^3$ and $Ar^4$ are same or different aromatic rings and $R^1$, $R^2$, $R^3$ and $R^4$ are alkyl groups having 1 - 20 carbon atoms, cycloalkyl groups having 3 - 20 carbon atoms, aryl groups having 6 - 20 carbon atoms, alkoxyl groups having 1 - 20 carbon atoms, acyl groups having 2 - 20 carbon atoms, or aralkyl groups having 7 - 20 carbon atoms, and $R^1$, $R^2$, $R^3$ and $R^4$ may be the same or different from each other. The subscripts a, b, c and d stand for the integers 0, 1, 2, 3 or 4 and may be the same or different from each other.

Preferably, 20 - 80% by mole of the composing units consists of the repeating unit having Formula (I) and 20 - 80% by mole of the composing units consists of a repeating unit having the Formula (II).

More preferably, 35 - 65% by mole of the composing units consists of the repeating unit having Formula (I) and 35 - 65% by mole of the composing units consists of a repeating unit having the Formula (II).

Preferably $Ar^1$, $Ar^2$, $Ar^3$ are same or different aromatic rings selected from

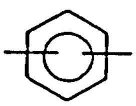, 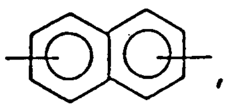, 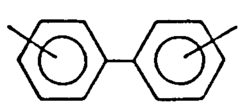 and 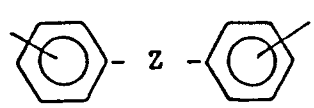

wherein Z stands for -O-, -S-, $-SO_2-$, -CO-, $-CH_2-$ or

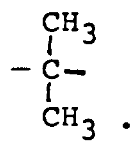

Preferably, the aromatic sulphide polymer has an inherent viscosity in the range from 0.02 to 10 dl/g when measured in a N-methyl-2-pyrrolidone/lithium chloride (in a ratio of 95/5 by weight) solvent in a concentration of 0.1 g/dl at 30 ° C or when measured in a chloronaphthalene solvent in a concentration of 0.1 g/dl at 210 ° C.

According to a second aspect of the present invention there is provided a process for producing an aromatic sulphide amide polymer or copolymer described above by the reaction of a dihalogenide (III) containing amide group with an aromatic dihalogenide (IV) to form sulphide bonds with the aid of a sulphide forming reagent.

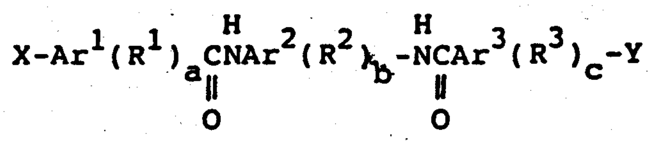

(III)

$$X-Ar^4(R^4)_d-Y \quad (IV)$$

In the formulae above, $Ar^1$, $Ar^2$, $Ar^3$ and $Ar^4$ are aromatic rings and $R^1$, $R_2$, $R^3$ and $R_4$ are alkyl groups having 1 - 20 carbon atoms, cycloalkyl groups having 3 - 20 carbon atoms, alkoxyl groups having 1 - 20 carbon atoms, aryl groups having 6 - 20 carbon atoms, acyl groups having 2 - 20 carbon atoms, or aralkyl groups having 7 - 20 carbon atoms, and the $R^1$, $R^2$, $R^3$ and $R^4$ may be the same or different from each other. The subscripts a, b, c and d each stand for the integers O, 1, 2, 3 or 4 and may be the same or different from each other. X and Y are halogens which may be the same or different from each other.

Preferably, the ratio of p/q is in the range from 100/0 to 1/99. A more preferred range of the ratio of p/q is 80/20 to 20/80. more preferably the range of the ratio of p/q is 65/35 to 35/65.

Preferably, the aromatic sulphide polymer or copolymer is composed of the repeating units expressed by the general formula (V):

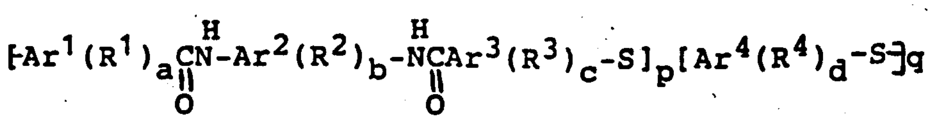

(V)

The process according to a second aspect of the present invention for synthesising an aromatic polysulphide amide polymer may include any of the processes for synthesising polyphenylene sulphide. Among them, however, those processes are particularly preferable in which an amide group containing aromatic dihalogen compound expressed by a general formula (III) is reacted with an aromatic dihalogen compound expressed by a general formula (IV) under the action of a sulphide forming reagent in an organic polar solvent.

The amide group containing aromatic dihalogen compounds to be used in the process according to the second aspect of the present invention are expressed by the general formula (III). Preferably, Formula (III) is

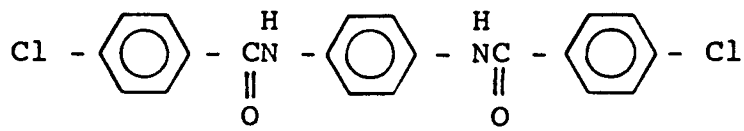

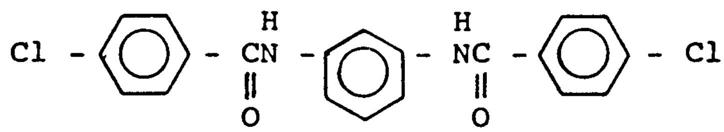

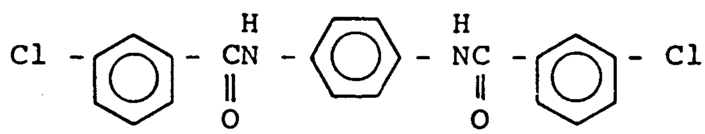

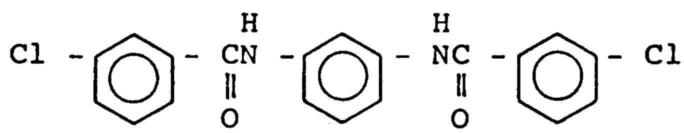

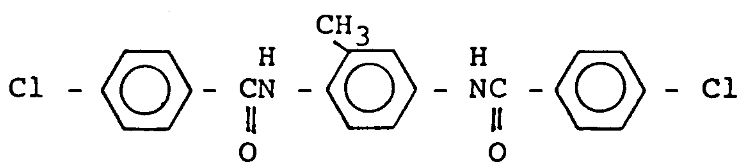

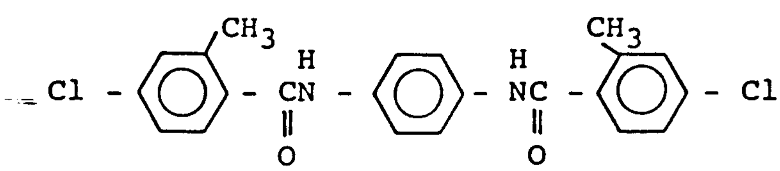

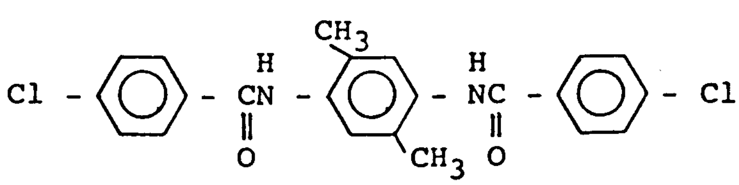

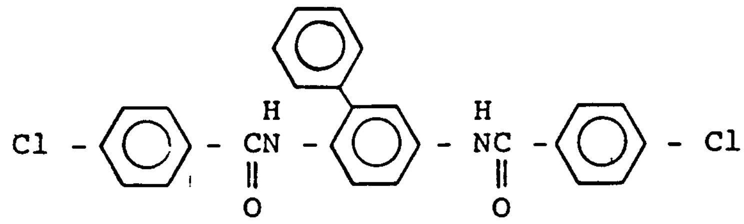

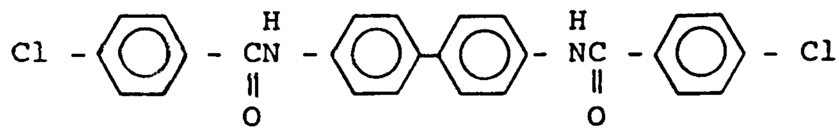

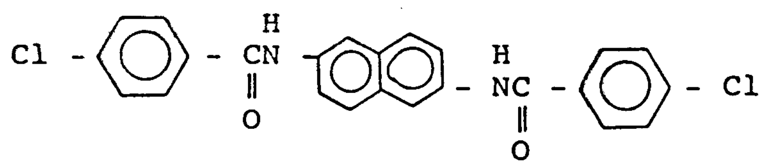

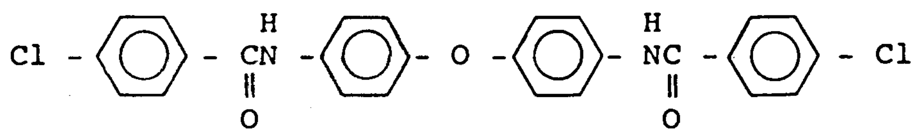

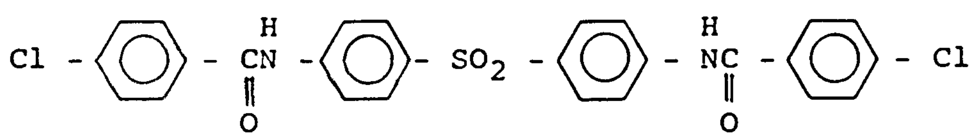

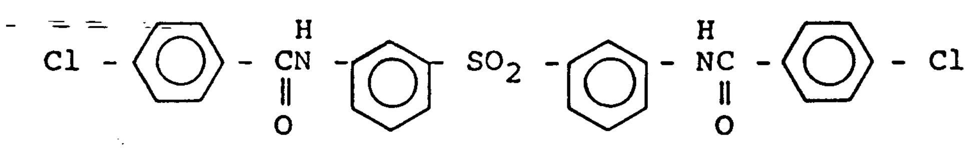

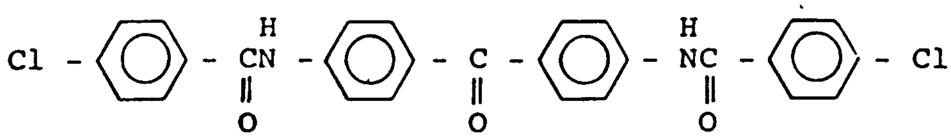

These amide group containing aromatic compounds should preferably have linkage at the para-positions for the sake of high heat resistance, but linkages at the meta-and/or the ortho-positions are also allowed to improve solubility and processability of the aromatic polysulphide amide polymers.

The amide group containing aromatic compounds above may be synthesised by any amide bond forming reaction. For example, the synthesis may be performed by the reaction of an aromatic diamine with a halogen containing aromatic carboxylic acid chloride.

The aromatic dihalogenides (IV) to be employed in this invention include all the aromatic dihalogenides described in Japanese Patent Publication No. Sho 45-3368. Preferable among them are dichlorobenzene, dichlorobenzophenone and dichlorodiphenylsulphone.

Organic polar solvents are preferably selected from those solvents which are aprotic and stable to

alkalis at higher temperature. Suitable organic polar solvents include N,N-dimethylacetamide, N-ethyl-2-pyrrolidone, hexamethylphosphoramide, dimethylsulfoxide, N-methyl-2-pyrrolidone (NMP), and 1,3-dimethylimidazolidinone.

The sulphide forming reagents to be used in this invention preferably include an alkali metal sulphide, an alkali metal hydrosulphide and an alkali metal base, or hydrogen sulphide and an alkali metal base. The sulphides and hydrosulphides of alkali metals may be used in the form of a hydrate.

The sulphide forming reagent may be either prepared in the reaction vessel or added from outside before adding the dihalogenide of the general formulae (III) and (IV) to the polymerisation system. Prior to the addition of the dihalogenide (III) and (IV) for polymerisation, the water content of the system should be preferably reduced, for instance by distillation, to less than 2.5 equivalents per mole of the sulphide forming reagent. The reagent for the sulphide formation are preferably sodium sulphide, a combination of hydrosulphide with sodium hydroxide or hydrogen sulphide with sodium hydroxide.

Preferably, various compounds known to effectively improve molecular weight of the polymer obtained when they are added in the polymerisation stage, such as a crown ether compound known as a phase transfer catalyst, a phosphorous salt, an ammonium salt, or a alkali metal carboxylate, should be added at the polymerisation stage.

The polymerisation is carried out under stirring at a temperature 150 - 300 °C, preferably 180 - 280 °C, for 0.5 - 24 hours, preferably 1 - 12 hours.

The ratio of the amide group containing compound expressed by the general formula (III) to a sulphide forming reagent is preferably (0.9 - 1.1) : 1. The amount of solvent should be adjusted so that the polymer produced by the polymerisation process amounts to 7 - 50%, preferably 10 - 40 %, by weight of the total system.

Conventional methods of recovery may be applied to the polymer obtained. Thus, the polymer may be isolated by distillation at a reduced pressure, flashing, and reprecipitation with water or an organic solvent, and purified by washing with water or an organic solvent, followed by drying.

The aromatic sulphide amide polymer of the invention, when dissolved in NMP/LiCl (in a ratio of 95/5 by weight) at a concentration of 0.1 g/dl, preferably shows an inherent viscosity of about 0.02 -10 dl/g at 30 °C, and preferably the value of the inherent viscosity ranges from about 0.05 to 10 dl/g. In case of a copolymer which is composed of a less amount of the amide group containing unit (I) and does not completely dissolve in said solvent, a solution in chloronaphthalene at 210 °C to a concentration of 0.1 g/dl shows an inherent viscosity of about 0.02 - 10 dl/g, where, however, an inherent viscosity of about 0.05 - 10 dl/g is preferable.

The molecular chain of the aromatic polysulphide amide polymers of the invention may favourably be changed to result in an elongated chain, cross linkage or branching by being heated in an oxidative atmosphere such as in air.

The polymers of the invention may be mixed with various known filler components when they are treated for moulding operations.

Preferable filler components include:

(a) fibrous fillers; glass fibre, carbon fibre, boron fibre, Aramid fibre, and alumina fibre.

(b) inorganic fillers: mica, talc, clay, graphite, carbon black, silica, asbestos, molybdenum sulphide, magnesium oxide, and calcium oxide.

The aromatic polysulphide amide polymer of the invention shows improved heat resistance and moulding processability and is therefore useful as a raw material for making a variety of moulded parts, films, fibres and coating materials.

Further objects and features of the present invention will become apparent from the following detailed description of preferred embodiments thereof with reference to the accompanying diagrams in which,

Fig. 1 is a diagram for an infrared absorption spectrum of the polymer obtained in Example 1.

Fig. 2 is an X-ray diffraction of the polymer obtained in Example 1.

Example 1

In an autoclave of 2 litre capacity were placed 0.6 mole of $Na_2S\ 2.9H_2O$ and 600 ml of N-methyl-2-pyrrolidone (NMP) and the mixture was agitated under a stream of nitrogen. The temperature was elevated up to 210 °C for dehydration and 24.2g of a distilled liquid comprising mainly of water was obtained. The reaction system was then cooled to 120 °C and 0.6 mole of

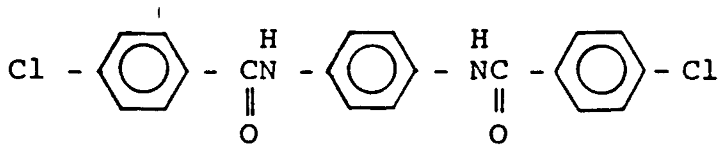

was added together with 80 ml of N-methyl-2-pyrrolidone, and the whole was sealed in an atmosphere of nitrogen and the temperature was elevated. Thus, the polymerisation was conducted for 6 hours at 240 ° C. When the reaction was complete, the reaction system was cooled, the content was poured into water, repeatedly washed with water and filtered. After final washing with methanol and drying 190 g of a light grey powdery polymer according to the present invention was obtained with a yield of 92%.

The polymer shown an inherent viscosity of 0.37 dl/g (NMP/LiCl; 95/5 by weight, 0.1 g/dl at 30 ° C).

It was found that the polymer could not be melt-moulded, but it was soluble in concentrated sulphide acid and NMP/LiCl and lustrous films of amber colour were produced by casting the solutions.

An infrared absorption (IR) spectrum of this polymer manifested an absorption assigned to a thioether bond at 1070 $cm^{-1}$ and absorptions assigned to an amide group at 3270, 1640 and 1505 $cm^{-1}$.

In addition, the elemental analysis agreed will with the calculated values as shown below.

Table 1 Elemental Analysis

| | C | H | N | S |
|---|---|---|---|---|
| Found (% by weight) | 69.0 | 3.9 | 7.9 | 9.1 |
| Calcd. (% by weight) | 69.3 | 4.1 | 8.1 | 9.3 |

Further the sulphide amide polymers decomposed at 489 ° C. Melting was not observed.

Example 2

Using the starting materials of the following formulation polymerisation was conducted with the same apparatus and the same process as in Example 1.

| | |
|---|---|
| $Na_2S \cdot 2.9H_2O$ | 0.6 mol |
| NMP | 680 ml |
| 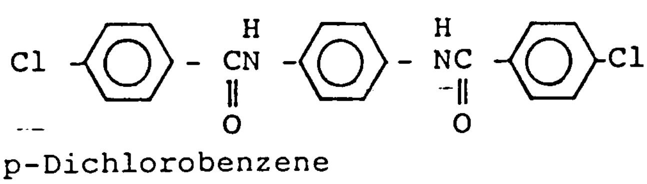 | 0.45 mol |
| p-Dichlorobenzene | 0.15 mol |

A polymer according to the present invention was obtained in an amount of 162 g with a yield of 94 %. The inherent viscosity was 0.45 dl/g (NMP/LiCl; 95/5 by weight 0.1 g/dl at 30 ° C). The polymer decomposed at 472 ° C and a small endothermic peak was observed at 246 ° C. Lustrous films of amber colour were produced by the compression moulding of this polymer at 380 ° C.

An IR spectrum of the polymer of Example 2 manifested the following absorption peaks,
3270, 1640, 1505 $cm^{-1}$ (assigned to amide group)
1070 $cm^{-1}$ (assigned to thioether)

Table 2 Elemental Analysis

| | C | H | N | S |
|---|---|---|---|---|
| Found (% by weight) | 68.8 | 3.9 | 7.1 | 11.1 |
| Calcd. (% by weight) | 69.1 | 4.0 | 7.3 | 11.2 |

Example 3

Polymerization was conducted with the following formulation of starting materials using the same apparatus and the same process as in Example 1.

| | |
|---|---|
| $Na_2S \cdot 2.9H_2O$ | 0.6 mol |
| NMP | 680 ml |
| 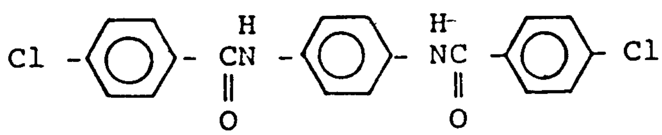 | 0.3 mol |
| p-Dichlorobenzene | 0.3 mol |

A polymer according to the present invention in an amount of 127 g was obtained with a yield of 94 %. The inherent viscosity was 0.43 dl/g (NMP/LiCl; 95/5 by weight, 0.1 g/dl at 30°C). The polymer decomposed at 493°C and a small endothermic peak was observed at 267°C.
An IR spectrum of the polymer of Example 3 manifested the following absorption peaks,
3250, 1635, 1505 $cm^{-1}$ (assigned to amide group)
1070 $cm^{-1}$ (assigned to thioether)

Table 3 Elemental Analysis

| | C | H | N | S |
|---|---|---|---|---|
| Found (% by weight) | 68.6 | 3.9 | 6.0 | 13.9 |
| Calcd. (% by weight) | 68.7 | 4.0 | 6.2 | 14.1 |

Example 4

Polymerisation was conducted using the following formulation of starting materials with the same

apparatus and the same process as in Example 1.

| | |
|---|---|
| $Na_2S \cdot 2.9H_2O$ | 0.6 mol |
| NMP | 680 ml |
| 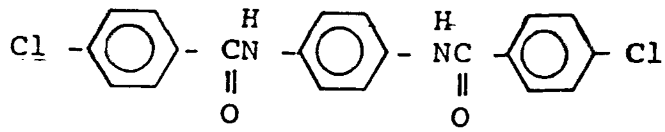 | 0.1 mol |
| p-Dichlorobenzene | 0.5 mol |

A polymer according to the present invention was obtained and amounted to 82 g with a yield of 92 %. The inherent viscosity was 0.19 dl/g (0.1 g/dl of chloronaphthalene at 210 °C). This substance decomposed at 488 °C and the melting point was 272 °C.

An IR spectrum of the polymer of Example 3 manifested the following absorption peaks,

3260, 1640, 1505 $cm^{-1}$ (assigned to amide group)

1070 $cm^{-1}$ (assigned to thioether)

Table 4 Elemental Analysis

| | C | H | N | S |
|---|---|---|---|---|
| Found (% by weight) | 67.5 | 3.8 | 3.1 | 21.5 |
| Calcd. (% by weight) | 67.7 | 3.9 | 3.2 | 21.7 |

Example 5

Polymerisation was conducted with the following starting materials using the same apparatus and the same process as in Example 1.

| | |
|---|---|
| $Na_2S \cdot 2.9H_2O$ | 0.6 mol |
| NMP | 680 ml |
| 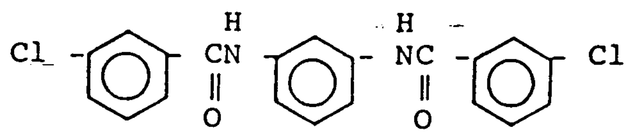 | 0.45 mol |
| p-Dichlorobenzene | 0.15 mol |

Since the polymer thus provided according to the present invention dissolved moderately well in NMP, the NMP was distilled off under a reduced pressure after completion of the reaction. The residue was repeatedly washed with hot water and filtered, then washed with methanol and dried, to obtain 146 g of the

polymer with a yield of 85 %.

The inherent viscosity was 0.24 dl/g (NMP/LiCl; 95/5 by weight, 0.1 g/dl at 30 °C). The polymer thermally decomposed at 443 °C and a small endothermic peak was observed at 217 °C.

An IR Spectrum of the polymer of Example 5 manifested the following absorption peaks,
3270, 1640, 1510 $cm^{-1}$ (assigned to amide group)
1070 $cm^{-1}$ (assigned to thioether)

Table 5 Elemental Analysis

| | C | H | N | S |
|---|---|---|---|---|
| Found (% by weight) | 68.7 | 3.8 | 7.0 | 10.9 |
| Calcd. (% by weight) | 69.1 | 4.0 | 7.3 | 11.2 |

The polymer obtained was more soluble than the copolymer in Example 2 which contained dihalogenides comprising para-combined amide groups.

Thus, the present invention provides novel aromatic sulphide amide polymers having amide groups in which the heat resistance and the mould property are improved and well balanced.

Examples 6 to 9

Polymerisation was conducted using the same materials shown in Table 6 with the same apparatus and method as in Example 1, to provide polymers according to the present invention.

Table 6

| Example | Amide Group Containing Dihalogenide (mol). | Sulphide Forming Reagent (mol) | Solvent (ml) |
|---|---|---|---|
| 6 | 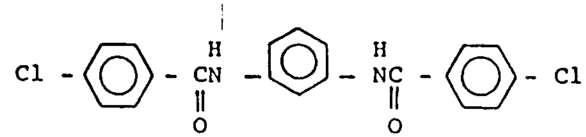 0.04 | $Na_2S \cdot 2.9H_2O$ 0.04 | NMP 200 |
| 7 | 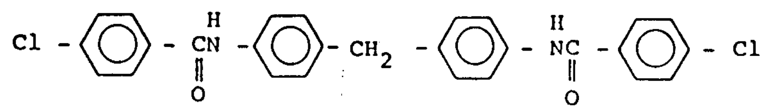 0.04 | $Na_2S \cdot 2.9H_2O$ 0.04 | NMP 200 |
| 8 | 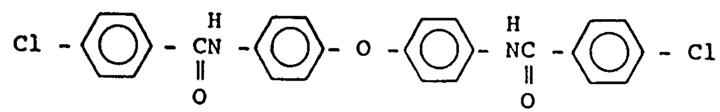 0.04 | $Na_2S \cdot 2.9H_2O$ 0.04 | NMP 200 |
| 9 | 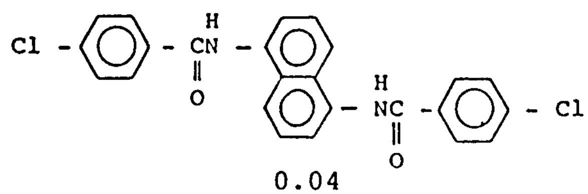 0.04 | $Na_2S \cdot 2.9H_2O$ 0.04 | NMP 200 |

Polymerisation results and properties of the resultant polymers are shown in Table 7.

Table 7

| Example | Yield (%) | Specific Viscosity (dl/g) | Thermal Decomposition Temperature (°C) | Elemental Analysis (% by weight) | C | H | N | S |
|---|---|---|---|---|---|---|---|---|
| 6 | 74 | 0.17 | 377 | Found | 68.9 | 3.8 | 7.9 | 9.0 |
| | | | | Calcd. | 69.3 | 4.1 | 8.1 | 9.3 |
| 7 | 79 | 0.15 | 511 | Found | 73.8 | 4.3 | 6.1 | 7.0 |
| | | | | Calcd. | 74.3 | 4.6 | 6.4 | 7.3 |
| 8 | 87 | 0.24 | 505 | Found | 71.0 | 3.9 | 6.2 | 7.1 |
| | | | | Calcd. | 71.2 | 4.1 | 6.4 | 7.3 |
| 9 | 96 | 0.19 | 470 | Found | 72.3 | 3.7 | 6.9 | 7.9 |
| | | | | Calcd. | 72.7 | 4.1 | 7.1 | 8.1 |

## Claims

1. An aromatic sulphide amide polymer, of which
1 - 100% by mole of the composing units consists of a repeating unit having the formula (I) and
99 - 0% by mole of the composing units consist of a repeating unit having the formula (II) below,
having an inherent viscosity ranging from 0.02 to 10 dl/g when measured in a N-methyl-2-pyrrolidone/lithium chloride (in a ratio of 95/5 by weight) solvent in a concentration of 0.1 g/dl at 30 ° C or when measured in a dichloronaphthalene solvent in a concentration of 0.1 g/dl at 210 ° c,

$$\left\{Ar^1(R^1)_a\underset{\underset{O}{\|}}{C}\overset{H}{N}-Ar^2(R^2)_b-\overset{H}{N}\underset{\underset{O}{\|}}{C}Ar^3(R^3)_c-S\right\} \qquad (I)$$

$$\left\{Ar^4(R^4)_d-S\right\} \qquad (II)$$

wherein, $Ar^1$, $Ar^2$, $Ar^3$ and $Ar^4$ are same or different aromatic rings and $R^1$, $R^2$, $R^3$ and $R^4$ are alkyl groups having 1 - 20 carbon atoms, cycloalkyl groups having 3 - 20 carbon atoms, aryl groups having 6 - 20 carbon atoms, alkoxyl groups having 1 - 20 carbon atoms, acyl groups having 2 - 20 carbon atoms or aralkyl groups having 7 - 20 carbon atoms, and $R^1$, $R^2$, $R^3$ and $R^4$ may be the same of different from each other, and a, b, c and d each stand for the integers 0, 1, 2, 3 or 4 and may be the same or different from each other.

2. An aromatic sulphide amide polymer according to claim 1, wherein $Ar^1$, $Ar^2$, $Ar^3$ are same or different aromatic rings selected from

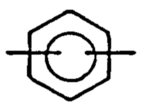 , 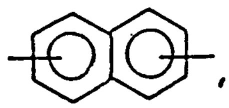 , 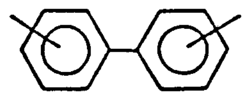 and 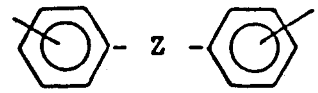

wherein Z stands for -O-, -S-, $-SO_2-$, -CO-, $-CH_2-$ or

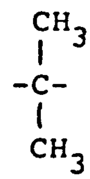 .

3. An aromatic sulphide amide polymer according to claim 1 or claim 2 wherein 20-80% by mole of the composing units consists of the repeating unit having formula (I) and 20-80% by mole of the composing units consists of a repeating unit having the formula (II).

4. An aromatic sulphide amide polymer according to any one of the preceding claims wherein 35-65% by mole of the composing units consists of the repeating unit having formula (I) and 35-65% by mole of the composing units consists of a repeating unit having the formula (II).

5. A process for the production of an aromatic sulphide amide polymer or copolymer according to claim 1 comprising the reaction of an amide group containing di-halogenide having the general formula (III) with an aromatic dihalogenide having the general formula (IV) to form sulphide bonds with the aid of a sulphide forming reagent,

$$X-Ar^1(R^1)_a\underset{\overset{\|}{O}}{C}\overset{H}{N}Ar^2(R^2)_b-\overset{H}{N}\underset{\overset{\|}{O}}{C}Ar^3(R^3)_c-Y \qquad (III)$$

$$X-Ar^4(R^4)_d-Y \qquad (IV)$$

wherein $Ar^1$, $Ar^2$, $Ar^3$ and $Ar^4$ are aromatic rings and $R^1$, $R_2$, $R^3$ and $R_4$ are alkyl groups having 1 - 20 carbon atoms, cycloalkyl groups having 3 - 20 carbon atoms, alkoxyl groups having 1 - 20 carbon atoms, acyl groups having 2 - 20 carbon atoms, or aralkyl groups having 7 - 20 carbon atoms, and the $R^1$, $R^2$, $R^3$ and $R^4$ may be the same or different from each other. The subscripts a, b, c and d each stand for the integers O, 1, 2, 3 or 4 and may be the same or different from each other. X and Y are halogens which may be the same or different from each other.

6. A process according to claim 5 for producing an aromatic sulphide amide polymer or copolymer composed of the repeating units expressed by the general formula (V);

$$[Ar^1(R^1)_a\underset{\overset{\|}{O}}{C}\overset{H}{N}-Ar^2(R^2)_b-\overset{H}{N}\underset{\overset{\|}{O}}{C}Ar^3(R^3)_c-S]_p[Ar^4(R^4)_d-S]_q \qquad (V)$$

comprising the reaction of an amide group containing dihalogenide expressed by the general formula (III) with an aromatic dihalogenide expressed by the general formula (IV) to form sulphide bonds with the aid of a sulphide forming reagent,

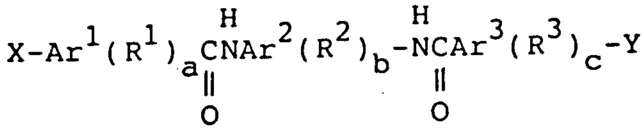 (III)

$$X\text{-}Ar^4(R^4)_d\text{-}Y \qquad (IV)$$

where, in the formulae above $Ar^1$, $Ar^2$, $Ar^3$ and $Ar^4$ are aromatic rings and $R^1$, $R^2$, $R^3$ and $R^4$ are alkyl groups having 1 - 20 carbon atoms, cycloalkyl groups having 3 - 20 carbon atoms, aryl groups having 6 - 20 carbon atoms, alkoxyl groups having 1 - 20 carbon atoms, acyl groups having 2 - 20 carbon atoms, or aralkyl groups having 7 - 20 carbon atoms, and $R^1$, $R^2$, $R^3$, and $R^4$ may be the same or different from each other, a, b, c and d each stand for the integers 0, 1, 2, 3 or 4 and may be the same or different from each other, X and Y are halogens which may be the same or different atoms from each other, and the ratio of p/q is in the range from 100/0 to 1/99.

**7.** A process for the production of an aromatic sulphide amide polymer or copolymer according to claim 5 or claim 6 wherein the reaction of the amide group containing dihalogenide having the general formula (IV) to form sulphide bonds with the aid of a sulphide forming reagent is carried out in an organic polar solvent.

**8.** A process for the production of an aromatic sulphate amide polymer or copolymer according to claim 5, 6 or 7 where $Ar^1$, $Ar^2$, $Ar^3$ are same or different aromatic rings selected from

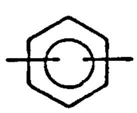, 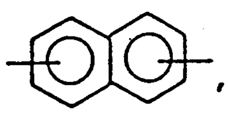, 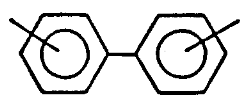 and 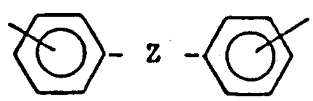

wherein Z stands for -O-, -S-, $-SO_2-$, -CO-, $-CH_2-$ or

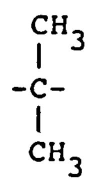 .

**9.** A process according to claim 5, 6, 7 or 8 wherein the aromatic dihalogenide (IV) is selected from the group consisting of dichlorobenzene, dichlorobenzophenone and dichlorodiphenylsulphone.

**10.** A process according to claim 5, 6, 7, 8 or 9 wherein the ratio of the amide group containing dihalogenide expressed by the general formula (III) to the sulphide forming reagent is 0.9:1 to 1.1:1.

**Patentansprüche**

**1.** Aromatisches Sulfid-Amid-Polymer, von dem
1 - 100 Mol-% der es aufbauenden Einheiten aus einer sich wiederholenden Einheit der Formel (I) bestehen und
99 - 0 Mol-% der es aufbauenden Einheiten aus einer sich wiederholenden Einheit der Formel (II), nachstehend, bestehen,
mit einer Eigenviskosität im Bereich von 0,02 bis 10 dl/g, gemessen in einem N-Methyl-2-pyrrolidon/Lithiumchloridlösungsmittel (in einem Gewichtsverhältnis von 95/5) in einer Konzentration von 0,1 g/dl bei 30 °C oder, falls gemessen in einem Dichlornaphthalinlösungsmittel, in einer Konzentration von 0,1 g/dl bei 210 °C,

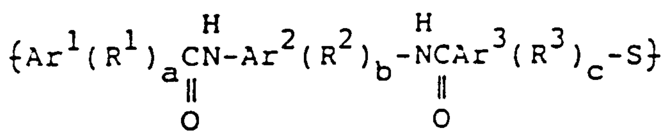 (I)

$$\{Ar^4(R^4)_d-S\}$$ (II)

wobei $Ar^1$, $Ar^2$, $Ar^3$ und $Ar^4$ gleiche oder verschiedene aromatische Ringe bedeuten und $R^1$ $R^2$, $R^3$ und $R^4$ Alkylreste mit 1 bis 20 Kohlenstoffatomen, Cycloalkylreste mit 3 bis 20 Kohlenstoffatomen, Arylreste mit 6 bis 20 Kohlenstoffatomen, Alkoxyreste mit 1 bis 20 Kohlenstoffatomen, Acylreste mit 2 bis 20 Kohlenstoffatomen oder Aralkylreste mit 7 bis 20 Kohlenstoffatomen bedeuten und $R^1$, $R^2$, $R^3$ und $R^4$ gleich oder verschieden sein können und a, b, c und d jeweils für die ganzen Zahlen 0, 1, 2, 3 oder 4 stehen und gleich oder verschieden sein können.

**2.** Aromatisches Sulfid-Amid-Polymer gemäß Anspruch 1, wobei $Ar^1$, $Ar^2$, $Ar^3$ gleich oder verschiedene aromatische Ringe, ausgewählt aus

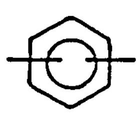, 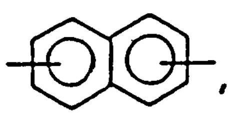, 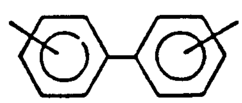 und 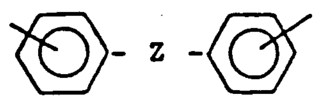

bedeuten, wobei Z für die Gruppen -O-, -S-, $-SO_2-$, -CO-, $-CH_2-$ oder

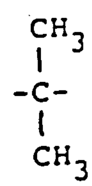

steht.

**3.** Aromatisches Sulfid-Amid-Polymer nach Anspruch 1 oder Anspruch 2, wobei 20 - 80 Mol-% der es aufbauenden Einheiten aus der sich wiederholenden Einheit der Formel (I) bestehen und 20 - 80 Mol-% der es aufbauenden Einheiten aus einer sich wiederholenden Einheit der Formel (II) bestehen.

**4.** Aromatisches Sulfid-Amid-Polymer nach einem der vorangehenden Ansprüche, wobei 35 - 65 Mol-% der es aufbauenden Einheiten aus der sich wiederholenden Einheit der Formel (I) bestehen und 35 bis 65 Mol-% der es aufbauenden Einheiten aus einer sich wiederholenden Einheit der Formel (II) bestehen.

**5.** Verfahren zur Herstellung eines aromatischen Sulfid-Amid-Polymers oder Copolymers nach Anspruch 1, umfassend die Umsetzung eines Amidgruppen, enthaltenden Dihalogenids der allgemeinen Formel (III) mit einem aromatischen Dihalogenid der allgemeinen Formel (IV) unter Herstellung von Sulfidbindungen mit Hilfe eines Sulfidierungsreagenzes

$$X-Ar^1(R^1)_a\underset{\underset{O}{\|}}{C}\overset{H}{N}Ar^2(R^2)_b-\overset{H}{N}\underset{\underset{O}{\|}}{C}Ar^3(R^3)_c-Y \qquad (III)$$

$$X-Ar^4(R^4)_d-Y \qquad (IV)$$

wobei $Ar^1$, $Ar^2$, $Ar^3$ und $Ar^4$ aromatische Ringe bedeuten und $R^1$, $R^2$, $R^3$ und $R^4$ Alkylreste mit 1 - 20 Kohlenstoffatomen, Cycloalkylreste mit 3 - 20 Kohlenstoffatomen, Alkoxyreste mit 1 - 20 Kohlenstoffatomen, Acylreste mit 2 - 20 Kohlenstoffatomen oder Aralkylreste mit 7 - 20 Kohlenstoffatomen bedeuten und die Reste $R^1$, $R^2$, $R^3$ und $R^4$ gleich oder verschieden sein können; die Buchstaben a, b, c und d jeweils für die ganzen Zahlen 0, 1, 2, 3 oder 4 stehen und gleich oder verschieden sein können; X und Y Halogenatome bedeuten, die gleich oder verschieden sein können.

**6.** Verfahren nach Anspruch 5 zur Herstellung eines aromatischen Sulfid-Amid-Polymers oder Copolymers, zusammengesetzt aus den sich wiederholenden Einheiten der allgemeinen Formel (V);

$$\left[Ar^1(R^1)_a\underset{\underset{O}{\|}}{C}\overset{H}{N}-Ar^2(R^2)_b-\overset{H}{N}\underset{\underset{O}{\|}}{C}Ar^3(R^3)_c-S\right]_p\left[Ar^4(R^4)_d-S\right]_q \qquad (V)$$

umfassend die Umsetzung eines Amidgruppen enthaltenden Dihalogenids der allgemeinen Formel (III) mit einem aromatischen Dihalogenid der allgemeinen Formel (IV) unter Herstellung von Sulfidbindungen mit Hilfe eines Sulfidierungsreagenzes,

$$X-Ar^1(R^1)_a\underset{\underset{O}{\|}}{C}\overset{H}{N}Ar^2(R^2)_b-\overset{H}{N}\underset{\underset{O}{\|}}{C}Ar^3(R^3)_c-Y \qquad (III)$$

$$X-Ar^4(R^4)_d-Y \qquad (IV)$$

wobei in den vorstehenden Formeln $Ar^1$, $Ar^2$, $Ar^3$ und $Ar^4$ aromatische Ringe bedeuten und $R^1$, $R^2$, $R^3$ und $R^4$ Alkylreste mit 1 - 20 Kohlenstoffatomen, Cycloalkylreste mit 3 - 20 Kohlenstoffatomen, Arylreste mit 6 - 20 Kohlenstoffatomen, Alkoxyreste mit 1 - 20 Kohlenstoffatomen, Acylreste mit 2 - 20 Kohlenstoffatomen oder Aralkylreste mit 7 - 20 Kohlenstoffatomen bedeuten und $R^1$, $R^2$, $R^3$ und $R^4$ gleich oder verschieden sein können, a, b, c und d jeweils für die ganzen Zahlen 0, 1, 2, 3 oder 4 stehen und gleich oder verschieden sein können, X und Y Halogenatome bedeuten, die gleich oder verschieden sein können und das Verhältnis von p/q im Bereich von 100/0 bis 1/99 liegt.

**7.** Verfahren zur Herstellung eines aromatischen Sulfid-Amid-Polymers oder Copolymers nach Anspruch 5 oder Anspruch 6, wobei die Umsetzung des Amidgruppen enthaltenden Dihalogenids der allgemeinen Formel (IV) unter Herstellung von Sulfidbindungen mit Hilfe eines Sulfidierungsreagenz in einem organischen polaren Lösungsmittel durchgeführt wird.

**8.** Verfahren zur Herstellung eines aromatischen Sulfid-Amid-Polymers oder Copolymers nach Anspruch 5, 6, oder 7, wobei $Ar^1$, $Ar^2$, $Ar^3$ gleich oder verschiedene aromatische Ringe ausgewählt aus

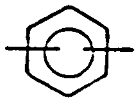, 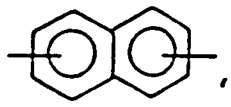, 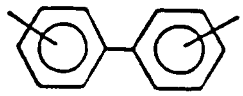 und 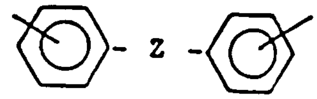

Z für die Gruppen -O-, -S-, $-SO_2-$, -CO-, $-CH_2-$ oder

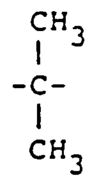

steht.

9. Verfahren nach Anspruch 5, 6, 7 oder 8, wobei das aromatische Dihalogenid (IV) ausgewählt ist aus Dichlorbenzol, Dichlorbenzophenon und Dichlordiphenylsulfon.

10. Verfahren nach Anspruch 5, 6, 7, 8 oder 9, wobei das Verhältnis des Amidgruppen enthaltenden Dihalogenids der allgemeinen Formel (III) zum Sulfidierungsreagenz 0,9:1 bis 1,1:1 beträgt.

## Revendications

1. Polymère de sulfure amide aromatique dont 1 à 100 % par mole des unités constitutives sont formés d'une unité répétitive de formule (I) et dont 99 à 0 % par mole des unités constitutives sont formés d'une unité répétitive de formule (II) ci-dessous, présentant une viscosité inhérente de 0,02 à 10 dl/g lorsqu'elle est mesurée dans un solvant de N-méthyl-2-pyrrolidone / chlorure de lithium (selon un rapport de 95/5 en poids) en concentration de 0,1 g/dl à 30 ° C ou lorsqu'elle est mesurée dans un solvant de dichloronaphtalène en concentration de 0,1 g/dl à 210 ° C :

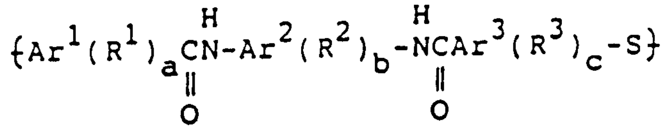 (I)

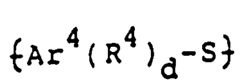 (II)

formules dans lesquelles $Ar^1$, $Ar^2$, $Ar^3$ et $Ar^4$ sont des noyaux aromatiques identiques ou différents et $R^1$, $R^2$, $R^3$ et $R^4$ sont des groupes alkyle ayant 1 à 20 atomes de carbone, des groupes cycloalkyle ayant 3 à 20 atomes de carbone, des groupes aryle ayant 6 à 20 atomes de carbone, des groupes alcoxy ayant 1 à 20 atomes de carbone, des groupes acyle ayant 2 à 20 atomes de carbone ou des groupes aralkyle ayant 7 à 20 atomes de carbone, $R^1$, $R^2$, $R^3$ et $R^4$ peuvent être identiques ou différents les uns des autres et les indices a, b, c et d sont des nombres entiers égaux à 0, 1, 2, 3 ou 4 et peuvent être identiques ou différents les uns des autres.

2. Polymère de sulfure amide aromatique selon la revendication 1, dans lequel $Ar^1$, $Ar^2$ et $Ar^3$ sont des noyaux aromatiques identiques ou différents choisis parmi les noyaux suivants :

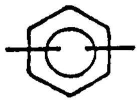, 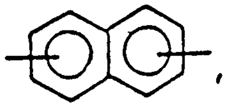, 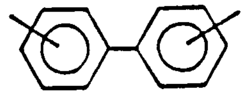 et 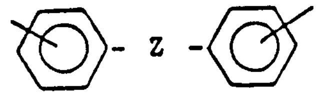

dans lesquels Z est -O-, -S-, $-SO_2-$, -CO-, $-CH_2-$ ou

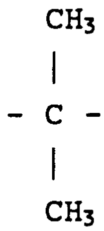

3. Polymère de sulfure amide aromatique selon la revendication 1 ou 2, dans lequel 20 à 80 % par mole des unités constitutives sont formées de l'unité répétitive de formule (I) et 20 à 80 % par mole des unités constitutives sont formées d'une unité répétitive de formule (II).

4. Polymère de sulfure amide aromatique selon l'une quelconque des revendications précédentes, dans lequel 35 à 65 % par mole des unités constitutives sont formées de l'unité répétitive de formule (I) et 35 à 65 % par mole des unités constitutives sont formées d'une unité répétitive de formule (II).

5. Procédé de production d'un polymère ou d'un copolymère de sulfure amide aromatique selon la revendication 1, consistant à faire réagir un dihalogénure contenant des groupes amide de formule générale (III) avec un dihalogénure aromatique de formule générale (IV) pour former des liaisons de sulfure à l'aide d'un réactif formateur de sulfure

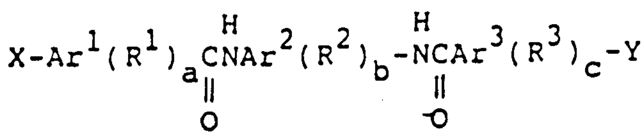 (III)

$$X-Ar^4(R^4)_d-Y \quad (IV)$$

formules dans lesquelles $Ar^1$, $Ar^2$, $Ar^3$ et $Ar^4$ sont des noyaux aromatiques et $R^1$, $R^2$, $R^3$ et $R^4$ sont des groupes alkyle ayant 1 à 20 atomes de carbone, des groupes cycloalkyle ayant 3 à 20 atomes de carbone, des groupes alcoxy ayant 1 à 20 atomes de carbone, des groupes acyle ayant 2 à 20 atomes de carbone ou des groupes aralkyle ayant 7 à 20 atomes de carbone, $R^1$, $R^2$, $R^3$ et $R^4$ peuvent être identiques ou différents les uns des autres, les indices a, b, c et d sont des nombres entiers égaux à 0, 1, 2, 3 ou 4 et peuvent être identiques ou différents les uns des autres et enfin X et Y sont des halogènes qui peuvent être identiques ou différents les uns des autres.

6. Procédé selon la revendication 5 pour la production d'un polymère ou d'un copolymère de sulfure amide aromatique composé des unités répétitives exprimées par la formule générale (V) :

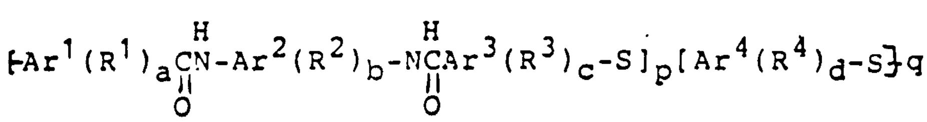 (V)

consistant à faire réagir un dihalogénure contenant des groupes amide de formule générale (III) avec un dihalogénure aromatique de formule générale (IV) pour former des liaisons de sulfure à l'aide d'un

réactif formateur de sulfure

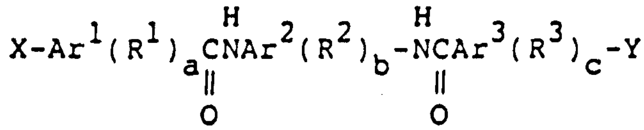 (III)

$X-Ar^4(R^4)_d-Y$ (IV)

formules dans lesquelles $Ar^1$, $Ar^2$, $Ar^3$ et $Ar^4$ sont des noyaux aromatiques et $R^1$, $R^2$, $R^3$ et $R^4$ sont des groupes alkyle ayant 1 à 20 atomes de carbone, des groupes cycloalkyle ayant 3 à 20 atomes de carbone, des groupes aryle ayant 6 à 20 atomes de carbone, des groupes alcoxy ayant 1 à 20 atomes de carbone, des groupes acyle ayant 2 à 20 atomes de carbone ou des groupes aralkyle ayant 7 à 20 atomes de carbone, $R^1$, $R^2$, $R^3$ et $R^4$ peuvent être identiques ou différents les uns des autres, les indices a, b, c et d sont des nombres entiers égaux à 0, 1, 2, 3 ou 4 et peuvent être identiques ou différents les uns des autres, X et Y sont des halogènes qui peuvent être des atomes identiques ou différents les uns des autres et le rapport de p/q se situe dans la plage de 100/0 à 1/99.

**7.** Procédé de production d'un polymère ou d'un copolymère de sulfure amide aromatique selon la revendication 5 ou 6, dans lequel la réaction du dihalogénure conteant des groupes amide de formule générale (IV) pour former des liaisons de sulfure à l'aide d'un réactif formateur de sulfure est réalisée dans un solvant polaire organique.

**8.** Procédé de production d'un polymère ou d'un copolymère de sulfure amide aromatique selon la revendication 5, 6 ou 7 dans lequel $Ar^1$, $Ar^2$ et $Ar^3$ sont des noyaux aromatiques identiques ou différents choisis parmi les noyaux suivants :

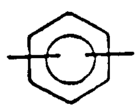 , 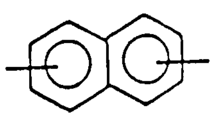 , 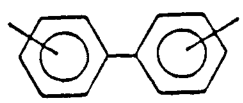 et 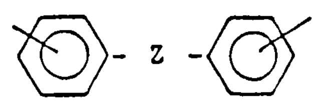

dans lesquels Z est -O-, -S-, $-SO_2-$, -CO-, $-CH_2-$ ou

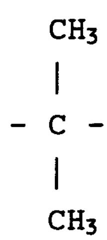

**9.** Procédé selon la revendication 5, 6, 7 ou 8, dans lequel le dihalogénure aromatique (IV) est choisi parmi le groupe du dichlorobenzène, de la dichlorobenzophénone et de la dichlorodiphénylsulfone.

**10.** Procédé selon la revendication 5, 6, 7, 8 ou 9, dans lequel le rapport du dihalogénure contenant des groupes amide exprimé par le formule générale (III) au réactif formateur de sulfure est de 0,9:1 à 1,1:1.

FIG.1

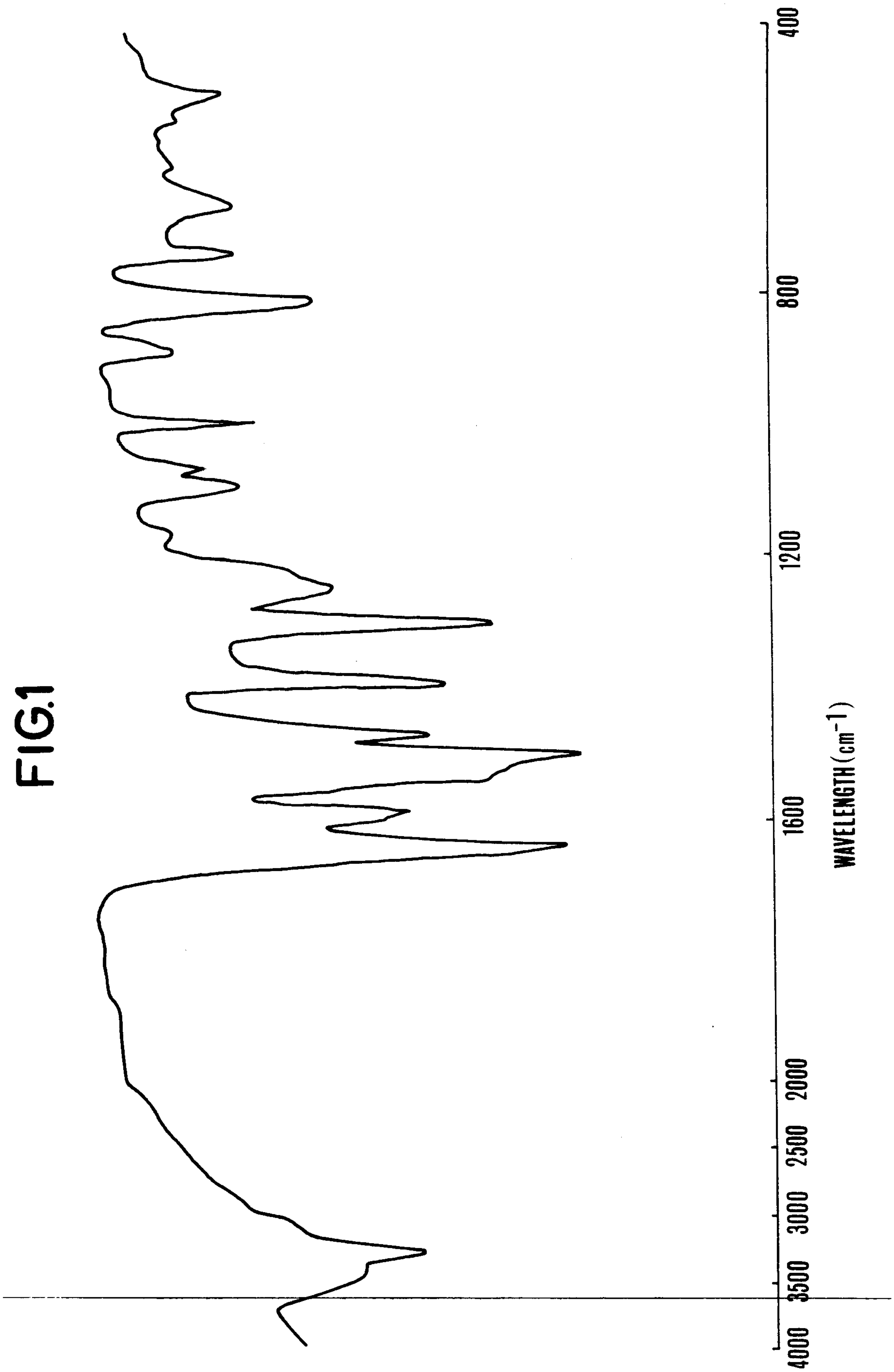

FIG.2

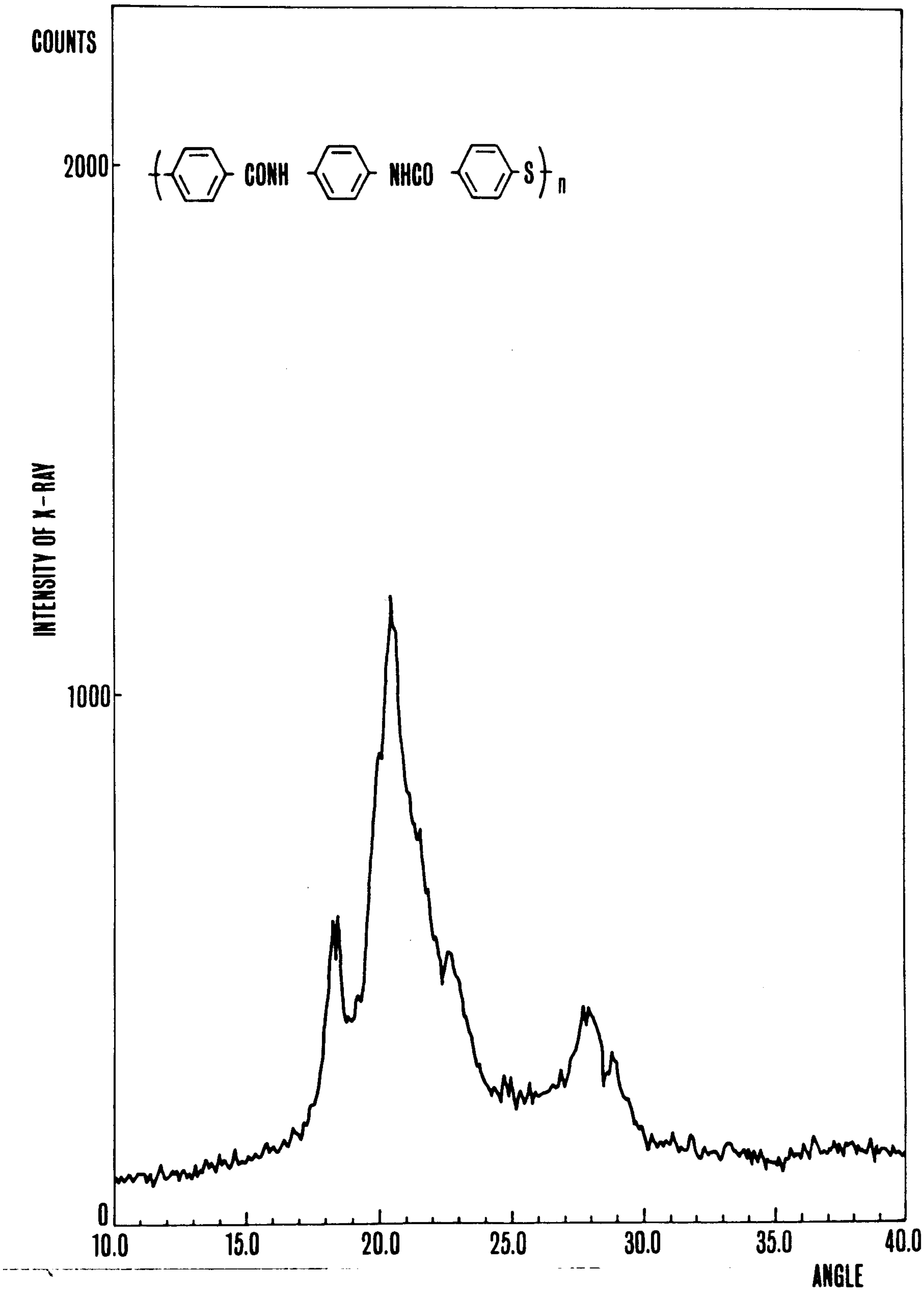
COUNTS
2000
1000
0
CONH
NHCO
S
n
INTENSITY OF X-RAY
10.0
15.0
20.0
25.0
30.0
35.0
40.0
ANGLE